# EUROPEAN PATENT SPECIFICATION

(11) **EP 3 043 455 B1**
(45) Date of publication and mention of the grant of the patent: **03.07.2019**
(21) Application number: 15203235.5
(22) Date of filing: 31.12.2015
(51) Int. Cl.: H02K 5/20, H02K 9/06, H02K 9/28, H02K 9/14, F04D 29/58, H02K 5/14, H02K 5/16

(54) **MOTOR WITH HEAT DISSIPATION STRUCTURE**
MOTOR MIT WÄRMEABLEITUNGSSTRUKTUR
MOTEUR AVEC STRUCTURE DE DISSIPATION DE CHALEUR

(30) Priority: 08.01.2015 TW 104100602
(43) Date of publication of application: 13.07.2016
(73) Proprietor: Chou, Wen-San, Tainan City (TW)
(72) Inventor: Chou, Wen-San, Tainan City (TW)
(74) Representative: Lang, Christian

(56) References cited:
- EP-A2- 2 071 710
- WO-A1-99/04479
- JP-A- 2002 010 575
- JP-U- S6 214 961
- US-A1- 2011 001 368

## Description

### (a) Technical Field of the Invention

The present invention relates to a motor with a heat dissipation structure and, more particularly, to a motor which has a cover being provided with a plurality of wind-catching projections and has a cooling fan which can induce airflow to quickly enter the motor's housing via the wind-catching projections to dissipate the heat accumulated in the motor.

### (b) Description of the Prior Art

Today, motors are widely used in industry for providing mechanical power. When a motor, irrespective of lower or high power, is running, the rotor assembly (including an armature core formed by an iron core wound with enameled wire, a commutator, a brush unit, etc.) arid the magnets in the motor's housing will generate heat and thus cause a temperature rise. In particular, the heat accumulated in the motor's housing may cause the brush unit to contain more carbon deposits, thus affecting the electrical circuit of the motor. Besides, high temperature resulting from the armature core may reduce the magnetic intensity of the magnets used in the motor. Thus, the performance of the motor will be gradually reduced.

Currently, emergency repair kits, which are commonly used in daily life, employ a low-power motor to drive a compressor unit therein for repairing punctured tires. However, in some countries, the Traffic Act stipulates that, when a vehicle has a punctured tire on a highway, the driver should repair the punctured tire within a specified period and should immediately drive away after the repair is completed to prevent rearward bump. Under these circumstances, for completing the repair as soon as possible, the motor of the compressor unit of an emergency repair kit should be operated at a higher speed. However, if the heat accumulated in the motor's housing cannot be quickly taken away, the performance of the motor will decrease. Even worse, the enameled wire of the armature core will probably be damaged to cause a short circuit, and thus the motor may be burn out.

For solving this problem, a motor is usually installed with a cooling fan at its output shaft. However, the airflow induced by the cooling fan can only flow along the outer surface of the motor's housing. Thus, the heat generated by the armature core, especially the enameled wire, in the motor is not easy to be taken away. The problem of a motor being subject to heat accumulation has not yet been overcome.

From EP 2 071 710 A2 an electric motor is known with a substantially cylindrical housing that is provided with a single manifold surrounding a radial fan mounted on a shaft extending through the housing. On the circumferential wall of the housing upstream openings are located in the vicinity of the commutator and the brush. The upstream openings are in fluid connection with the inner space of the manifold such that the air accelerated by the fan is forced to move from the inner space of the manifold through the upstream openings toward the commutator and the brush cooling the same thereby. The air leaves the interior of the housing via downstream vents located in the circumferential wall of the housing, as well. The purpose of the radial fan being arranged in the manifold is to provide not only a high air flow, but also a high air pressure

From US 2011/0001368 A1 a power tool with an electric motor is known. The housing of the electric motor is a simple sleeve forming a part of the stator of the motor and onto which a cylindrical heat dissipation device is arranged. The motor further comprises a radial fan and one or more air guiding members directing the air radially accelerated by the fan toward the heat dissipation device.

From JP 2002 010575 A an electric motor is known with a substantially cylindrical housing that is provided with a single manifold surrounding an outer radial fan mounted on a shaft extending through the housing. On the circumferential wall of the housing upstream openings are located. The upstream openings are in fluid connection with the inner space of the manifold such that the air accelerated by the outer fan is forced to move from the inner space of the manifold through the upstream openings. The air leaves the interior of the housing via downstream openings located in the circumferential wall of the housing, as well. In addition, the electric motor comprises an inner radial fan being also mounted on the shaft but arranged in the interior of the housing of the motor. The purpose of the inner fan is to transport heat from the stator enclosed by the housing to the circumferential wall of the housing which is in turn cooled by the air flow induced by the outer fan. The air accelerated by the inner fan can move within the housing via wind holes located in the stator.

JP S62 14961 U discloses an air blower device with an electric motor. The housing of the motor is connected with an air return channel that bypasses some of the air discharged from the air blower device. The air return channel has two branched ends communicating each with the interior of the housing via a through hole, respectively, located in the circumferential wall of the same.

From WO 99/04479 A1 an electric motor is known with a substantially cylindrical housing that is provided with a single shroud surrounding an additional radial fan mounted on a shaft extending through the housing. On the circumferential wall of the housing upstream ventilation openings and downstream ventilation openings are located in the vicinity of the brush assembly. The upstream ventilation openings are in fluid connection with the inner space of the shroud such that the air accelerated by the fan is forced to move from the inner space of the shroud through the upstream ventilation openings toward the brush assembly cooling the same thereby. The air leaves the interior of the housing via downstream ventilation openings located in the circumferential wall of the housing, as well, and via further downstream openings located in the bottom of the housing. The additional downstream ventilation openings in the circumferential wall, the additional fan and the shroud surrounding the additional fan allow for a better cooling of the brush assembly.

### SUMMARY OF THE INVENTION

One object of the present invention is to provide an electric motor with a heat dissipation structure, which comprises a substantially cylindrical housing, a heat dissipation structure. This object is achieved by an electric motor with the features of claim 1. Further embodiments are subject matter of the dependent claims. The electric motor according to the invention comprises a substantially cylindrical housing, a rotor assembly, a cover, and a cooling fan. The housing has a circumferential wall which terminates at a flat closure wall and opens out at an opening opposite to the flat closure wall, wherein the flat closure wall of the housing is provided with a first bearing at its center and defines a plurality of downstream through holes; the circumferential wall of the housing defines a plurality of upstream through holes. The rotor assembly is located in the housing. The cover is provided with a second bearing at its center and mounted to the housing for sealing the opening of the housing. The cooling fan is mounted at one end of a rotating shaft of the
rotor assembly, near the cover. The cover is provided with a plurality of wind-catching projections around its circumference, wherein each wind-catching projection is located above one of the upstream through holes of the housing. Each wind-catching projection is a bulging layer which has a roof and two slant walls joined between the roof and the circumference of the cover to define an air guiding channel therebetween facing towards the cooling fan and communicating with one of the upstream through holes of the housing, so that the airflow induced by the cooling fan can easily pass through the air guiding channels and the upstream through holes to enter the housing, and can go out of the housing via the downstream through holes to take away the heat generated in the motor, so that heat is not easy to accumulate in the motor, and thus the performance and service life of the motor can be increased.

Other objects, advantages, and novel features of the present invention will become more apparent from the following detailed description when taken in conjunction with the accompanying drawings.

### BRIEF DESCRIPTION OF THE DRAWINGS

FIG 1 shows a 3-dimensional view of a motor according to one embodiment of the present invention.
FIG 2 shows a 3-dimensional view of the motor, which is viewed from a different angle than FIG 1.
FIG 3 shows a partially exploded view of the motor.
FIG 4 shows an exploded view of the motor.
FIG 5 shows a 3-dimensional view of a cover used in the motor, wherein the cover is provided with a plurality of wind-catching projections.
FIG 6 shows a plan view of the motor.
FIG 7 shows a sectional view of the motor taken along line A-A in FIG 6, wherein the airflow entering the motor' housing is demonstrated.
FIG 8 shows a sectional view of the motor taken along line B-B in FIG 6, wherein the airflow entering the motor's housing is demonstrated.
FIG 9 shows a schematic view of the motor, wherein some of the airflow flows along the outer surface of the motor's housing by way of recesses is demonstrated.

### DETAILED DESCRIPTION OF THE PREFERRED EMBODIMENTS

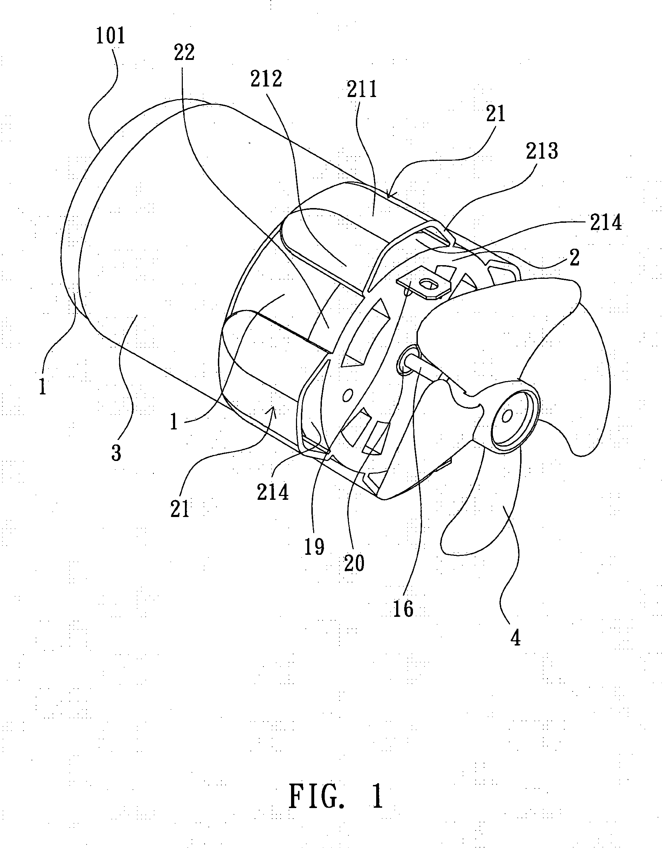

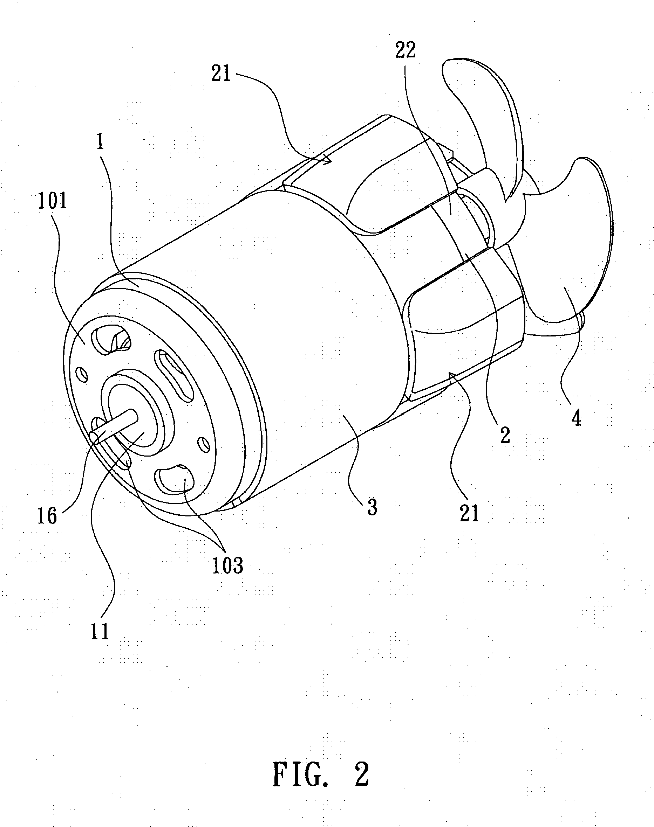

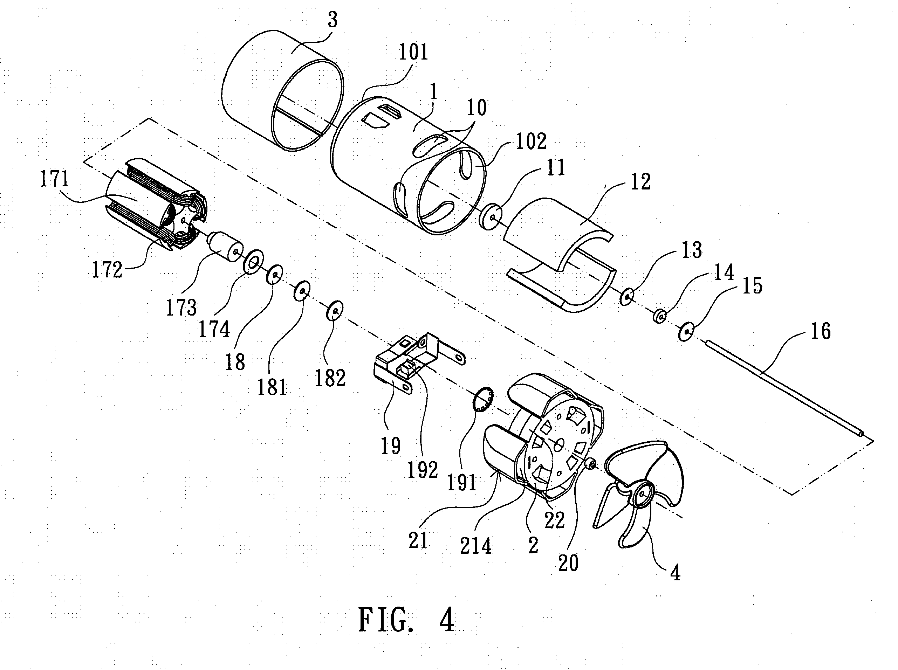

Since motors are commonly used devices, the principles of a motor's operation are not illustrated in the following paragraphs. However, basic elements of a motor will be described in this specification. Referring to FIGS. 1, 2 and 4, a motor according to one embodiment of the present invention is shown, which generally comprises a substantially cylindrical housing 1, a rotor assembly, a cover 2, and a cooling fan 4. The housing 1 has a circumferential wall which terminates at a flat closure wall 101 (a front end of the motor) and opens out at an opening 102 (a rear end of the motor) which is opposite to the flat closure wall 101 (see FIG 4). The flat closure wall 101 is provided with a first bearing 11 at its center and defines a plurality of downstream through holes 103 around the first bearing 11 (see FIG 2). The circumferential wall of the housing 1 defines a plurality of upstream through holes 10 (see FIG 4).

The housing 1 is provided with a pair of opposite magnets 12 at the inner surface of its circumferential wall. In the housing 1, a rotor assembly is provided, which includes a number of washers 13, 181, 182, a thrust ring 14, an adjustment ring 15, a rotating shaft 16, an armature core formed by an iron core 171 wound with enameled wire 172, a commutator 173, a varistor 174, an oil-resistant ring 18, an electrical terminal unit 19, a compression ring 191, and a brush unit 192. A first end of the rotating shaft 16 of the rotor assembly is mounted to the first bearing 11 at the flat closure wall 101 of the housing 1.

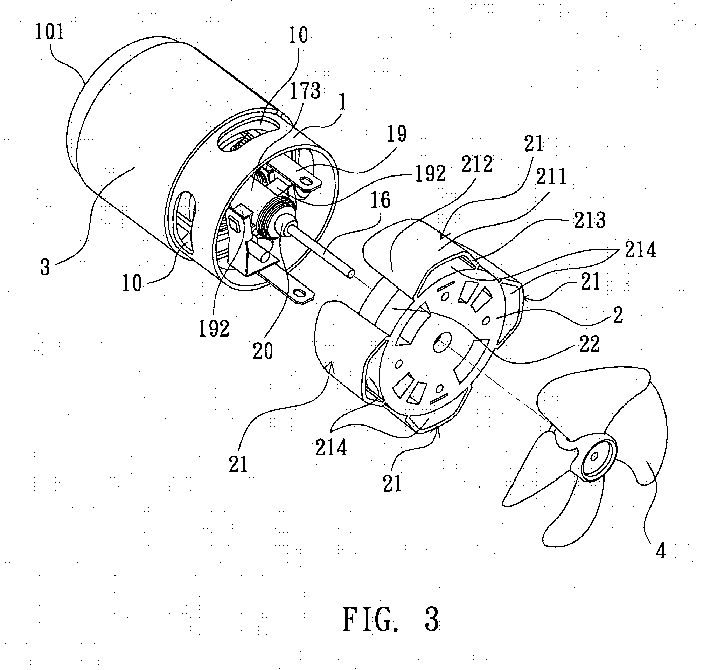

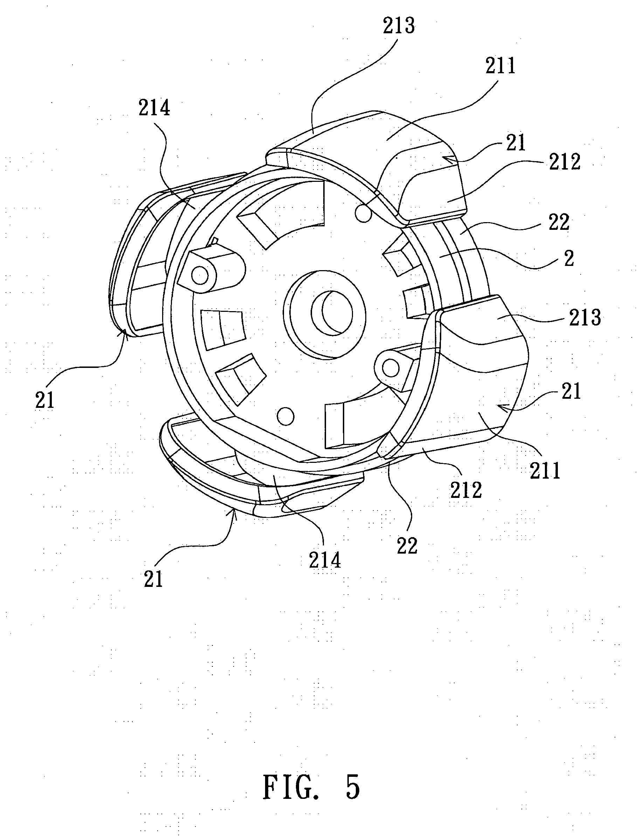

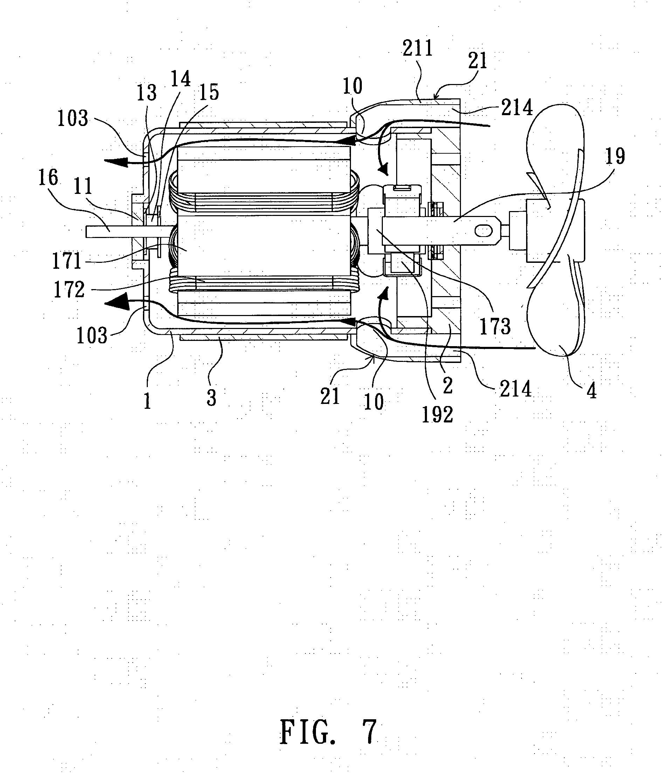

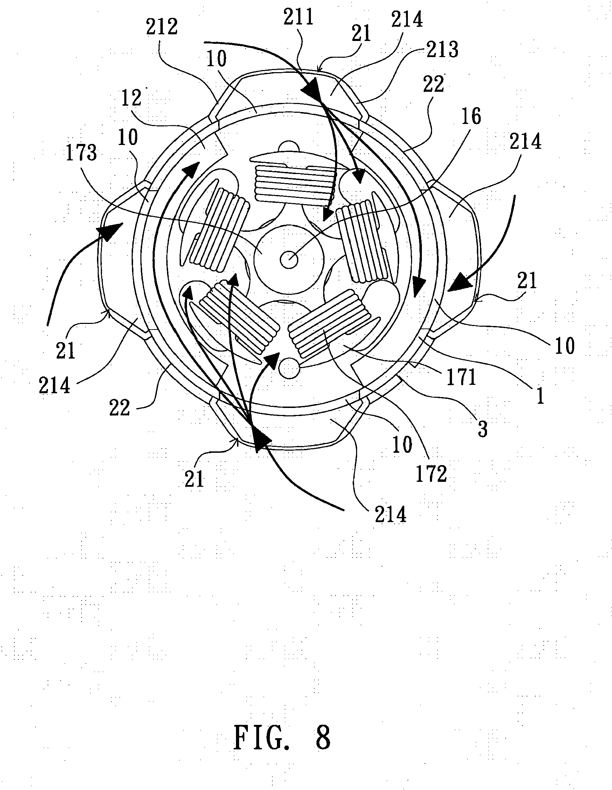

Referring to FIGS. 3 and 5, the cover 2 is provided with a second bearing 20 at its center and mounted to the housing 1 for seating the opening 102 of the housing 1. A second end of the rotating shaft 16 of the rotor assembly is mounted at the second bearing 20 and installed with the cooling fan 4, which is located near the cover 2. As shown, the cover 2 is provided with a plurality of wind-catching projections 21 around its circumference, such that, when the cover 2 is mounted to the housing 1, each wind-catching projection 21 is located above one of the upstream through holes 10 of the housing 1. Each of the wind-catching projections 21 is a bulging layer which has a roof 211 and two slant walls 212, 213 joined between the roof 211 and the circumference of the cover 2, such that an air guiding channel 214 is defined between the roof 211, the two slant walls 212, 213, and the circumference of the cover 2, wherein the air guiding channel 214 faces towards the cooling fan 4 and communicates with one of the upstream through holes 10. Furthermore, a recess 22 is defined between two adjacent wind catching projections 21. As such, the airflow induced by the cooling fan 4 can easily pass through the air guiding channels 214 and the upstream through holes 10 to enter the housing 1, so that the heat generated by the brush unit 192 and the
commutator 173 due to friction therebetween, the heat generated by the enameled wire 172 due to electrical current, and the heat generated by the magnets 12 can be dissipated properly (see FIGS. 7 and 8).

Referring to FIG 1, as described above, the cooling fan 4 is installed at the second end of the rotating shaft 16 of the rotor assembly, near the cover 2.

Referring to FIGS. 4 and 7, a sleeve 3, made of a magnetically permeable metal, can be closely fitted around the circumferential wall of the housing 1 to further increase the performance of the motor.

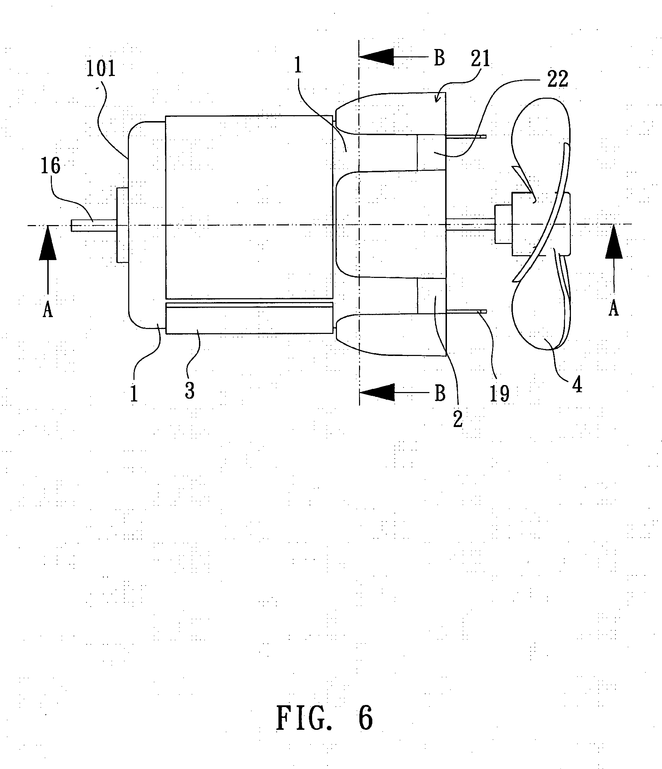

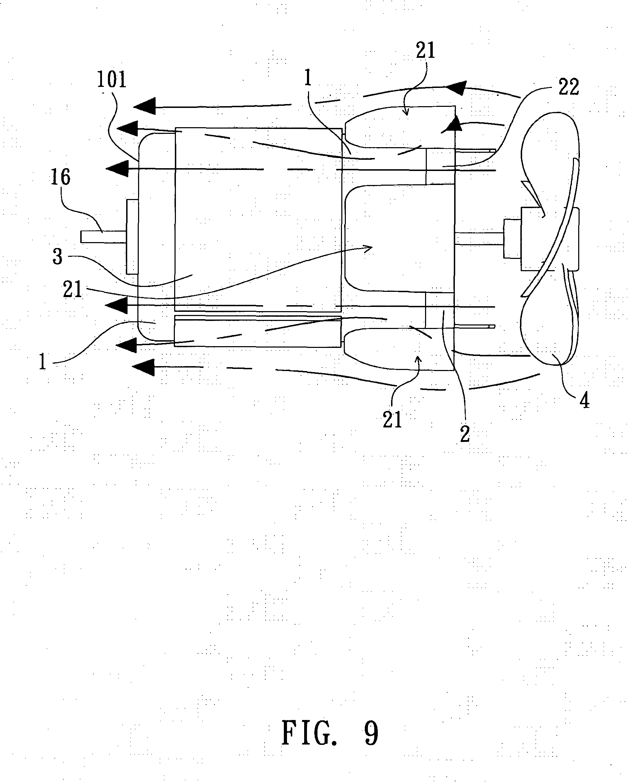

When the motor is running, as shown in FIGS. 6 through 9, the cooling fan 4 is rotated to induce airflow, which can pass through the air guiding channels 214 and the upstream through holes 10 to enter the housing 1, wherein the air guiding channels 214, which faces towards the cooling fan 4, can effectively collect most part of the airflow induced by the cooling fan 4 to enter the housing 1 and finally to go out of the housing 1 via the downstream through holes 103, so that the heat generated by the rotor assembly in the motor can be quickly dissipated. Particularly, the heat generated by the brush unit 192 and the commutator 173 (see FIG 7), and the heat generated by the iron core 171 and the enameled wire 172 (see FIGS. 7 and 8) can be dissipated properly, so that heat is not easy to accumulate in the motor's housing. On the other hand, some of the airflow induced by the cooling fan 4, which does not enter the housing 1, can flow along the outer surface of the circumferential wall of the housing via the recesses 22 between the wind-catching projections 21 to cool down the housing 1 (see FIG 9), so that the motor can be further protected from being damaged due to heat and thus the service life of the motor can be increased.

As a summary, the present invention is featured in that the cover 2 is provided with a plurality of wind-catching projections 21, each of which has one roof 211 and two slant walls 212, 213 joined between the roof 211 and the circumference of the cover 2 so as to define there between an air guiding channel 214 which faces towards the cooling fan 4 and communicates with one of the upstream through holes 10 of the motor's housing 1. Therefore, when the motor is running, the cooling fan 4 is rotated to induce airflow, which can easily pass through the air guiding channels 214 arid the upstream through holes 10 to enter the motor's housing 1, and can finally go out of the housing 1 by way of the downstream through holes 103 to quickly take away the heat generated by the rotor assembly in the motor, so that heat is not easy to accumulate in the motor's housing 1. Therefore, the performance and service life of the motor can be increased.

## Claims

1. An electric motor including a substantially cylindrical housing (1), a rotor assembly including a rotating shaft (16), a cover (2), and a cooling fan (4), the housing (1) having a circumferential wall which terminates at a flat closure wall (101), the flat closure wall (101) of the housing being provided with a first bearing (11) at its center and defining a plurality of downstream through holes (103), the circumferential wall of the housing defining a plurality of upstream through holes (10), the rotor assembly being located in the housing (1), the cover (2) comprising a circular body that is mounted to the housing (1), wherein the cover (2) further includes a plurality of axially extending wind-catching projections (21), wherein each wind-catching projection (21) is configured to be located above one of the upstream through holes (10) of the housing (1), wherein each wind-catching projection (21) defines an air guiding channel (214) facing towards the cooling fan (4) and communicating with one of the upstream through holes (10) of the housing (1), so that the airflow induced by the cooling fan (4) can easily pass through the air guiding channels (214) and the upstream through holes (10) to enter the housing (1), wherein a first end of the rotating shaft (16) of the rotor assembly is mounted to the first bearing (11) at the flat closure wall (101) of the housing (1), and wherein the second end of the rotating shaft (16) of the rotor assembly is mounted at a second bearing (20) and the cooling fan (4) being mounted at said second end of the rotating shaft (16) of the rotor assembly;
**characterized in that**
the housing (1) opens out at an opening (102) opposite to the flat closure wall (101);
wherein the cover (2) is configured to be fitted with the housing (1) for sealing the opening (102) of the housing (1), wherein the housing (1) and the cover (2) further cooperate with each other to define a receiving space;
wherein the second bearing (20) is formed at the center of the circular body of the cover (2), wherein the cooling fan (4) mounted at the second end of the rotating shaft (16) is arranged near the cover (2) and outside the receiving space defined by the housing (1) and the cover (2);
wherein the plurality of axially extending wind-catching projections (21) are integrally formed on the outer circumference of the circular body of the cover (2), such that each wind-catching projection (21) is located above one of the upstream through holes (10) of the housing (1), wherein the airflow induced by the cooling fan (4) easily passes through the air guiding channels (214) and the upstream through holes (10) to enter the housing (1) and can go out of the housing (1) via the downstream through holes (103).

2. The motor according to claim 1, wherein each of the wind-catching projections (21) is a bulging layer which has a roof (211) and two slant walls (212)(213) joined between the roof (211) and the circumference of the cover (2), the air guiding channel (214) of each wind-catching projection (21) being defined between the roof (211) and the two slant walls (212)(213) of each wind-catching projection (21), and the circumference of the cover (1); whereby the airflow induced by the cooling fan (4) can easily pass through the air guiding channels (214) and the upstream through holes (10) to enter the housing (1).

3. The motor according to claim 1, wherein a sleeve (3), made of a magnetically permeable metal, is closely fitted around the circumferential wall of the housing (1) to further increase the performance of the motor.

4. The motor according to claim 1, wherein a recess (22) is defined between two adjacent ones of the wind-catching projections (21), so that some of the airflow induced by the cooling fan (4), which does not enter the housing (1), may flow along the outer surface of the circumferential wall of the housing (1) to cool down the housing (1).

## Patentansprüche

1. Elektro-Motor, umfassend ein im Wesentlichen zylindrisches Gehäuse (1), eine Rotorbaugruppe, die eine Drehwelle (16) beinhaltet, eine Abdeckung (2) und einen Kühlerlüfter (4), wobei das Gehäuse (1) eine Umfangswand hat, welche an einer flachen Abschlusswand (101) endet, wobei die flache Abschlusswand (101) des Gehäuses in ihrer Mitte mit einem ersten Lager (11) versehen ist und eine Mehrzahl von stromabwärts gelegenen Durchgangslöchem (103) aufweist, wobei die Umfangswand des Gehäuses eine Mehrzahl von stromaufwärts gelegenen Durchgangslöchem (10) aufweist, wobei die Rotorbaugruppe in dem Gehäuse (1) angeordnet ist, wobei die Abdeckung (2) einen runden Körper umfasst, der an dem Gehäuse (1) montiert ist, wobei die Abdeckung (2) ferner eine Mehrzahl von sich axial erstreckenden Windfangvorsprüngen (21) aufweist, wobei jeder Windfangvorsprung (21) zur Platzierung oberhalb von einem der stromaufwärts gelegenen Durchgangslöcher (10) des Gehäuses (1) konfiguriert ist, wobei jeder Windfangvorsprung (21) einen Luftführungskanal (214) definiert, der in Richtung des Kühlerlüfters (4) weist und mit einem der stromaufwärts gelegenen Durchgangslöcher (10) des Gehäuses (1) kommuniziert, sodass der durch den Kühlerlüfter (4) induzierte Luftstrom leicht durch die Luftführungskanäle (214) und die stromaufwärts gelegenen Durchgangslöcher (10) hindurchgehen kann, um in das Gehäuse (1) einzutreten, wobei ein erstes Ende der Drehwelle (16) der Rotorbaugruppe an dem ersten Lager (11) an der flachen Abschlusswand (101) des Gehäuses (1) montiert ist, und wobei das zweite Ende der Drehwelle (16) der Rotorbaugruppe an einem zweiten Lager (20) montiert ist und der Kühlerlüfter (4) an dem zweiten Ende der Drehwelle (16) der Rotorbaugruppe montiert ist,
**dadurch gekennzeichnet, dass**
das Gehäuse (1) an einer Öffnung (102) gegenüber von der flachen Abschlusswand (101) nach außen hin offen ist,
wobei die Abdeckung (2) zur Anbringung an dem Gehäuse (1) konfiguriert ist, um die Öffnung (102) des Gehäuses (1) dicht zu verschließen, wobei das Gehäuse (1) und die Abdeckung (2) ferner miteinander zusammenwirken, um einen Aufnahmeraum zu definieren,
wobei das zweite Lager (20) in der Mitte des runden Körpers der Abdeckung (2) gebildet ist, wobei der Kühlerlüfter (4), der an dem zweiten Ende der Drehwelle (16) montiert ist, nahe der Abdeckung (2) und außerhalb des durch das Gehäuse (1) und die Abdeckung (2) definierten Aufnahmeraums angeordnet ist,
wobei die mehreren sich axial erstreckenden Windfangvorsprünge (21) integral an dem Außenumfang des runden Körpers der Abdeckung (2) so ausgebildet sind, dass sich jeder Windfangvorsprung (21) oberhalb von einem der stromaufwärts gelegenen Durchgangslöcher (10) des Gehäuses (1) befindet, wobei der durch den Kühlerlüfter (4) induzierte Luftstrom zum Eintreten in das Gehäuse (1) leicht durch die Luftführungskanäle (214) und die stromaufwärts gelegenen Durchgangslöcher (10) hindurchgeht und über die stromabwärts gelegenen Durchgangslöcher (103) aus dem Gehäuse (1) austreten kann.

2. Motor nach Anspruch 1, bei welchem jeder der Windfangvorsprünge (21) eine gewölbte Schicht ist, welche ein Dach (211) und zwei schräge Wände (212)(213) hat, die zur Verbindung zwischen dem Dach (211) und dem Umfang der Abdeckung (2) vorgesehen sind, wobei der Luftführungskanal (214) von jedem Windfangvorsprung (21) zwischen dem Dach (211) und den beiden schrägen Wänden (212)(213) des jeweiligen Windfangvorsprungs (21) und dem Umfang der Abdeckung (1) definiert ist; wobei der durch den Kühlerlüfter (4) induzierte Luftstrom leicht durch die Luftführungskanäle (214) und die stromaufwärts gelegenen Durchgangslöcher (10) hindurchgehen kann, um in das Gehäuse (1) einzutreten.

3. Motor nach Anspruch 1, bei welchem eine Hülse (3), die aus einem magnetisch permeablen Metall gefertigt ist, eng anliegend um die Umfangswand des Gehäuses (1) angebracht ist, um die Motorleistung weiter zu erhöhen.

4. Motor nach Anspruch 1, bei welchem eine Aussparung (22) zwischen zwei benachbarten Windfangvorsprüngen (21) definiert ist, sodass ein Teil des durch den Kühlerfüfter (4) induzierten Luftstroms, der nicht in das Gehäuse (1) eintritt, an der Außenfläche der Umfangswand des Gehäuses (1) entlangströmen kann, um das Gehäuse (1) abzukühlen.

## Revendications

1. Moteur électrique incluant un logement sensiblement cylindrique (1), un ensemble rotor incluant un arbre tournant (16), un cache (2), et un ventilateur de refroidissement (4), le logement (1) ayant une paroi circonférentielle qui aboutit à une paroi de fermeture plate (101), la paroi de fermeture plate (101) du logement étant pourvue d'un premier palier (11) en son centre et définissant une pluralité de trous traversants aval (103), la paroi circonférentielle du logement définissant une pluralité de trous traversants amont (10), l'ensemble rotor étant situé dans le logement (1), le cache (2) comprenant un corps circulaire qui est monté sur le logement (1), dans lequel le cache (2) inclut en outre une pluralité de saillies de prise de vent s'étendant axialement (21), dans lequel chaque saillie de prise de vent (21) est configurée pour être située au-dessus de l'un des trous traversants amont (10) du logement (1), dans lequel chaque saillie de prise de vent (21) définit un canal de guidage d'air (214) tourné vers le ventilateur de refroidissement (4) et communiquant avec l'un des trous traversants amont (10) du logement (1), de telle sorte que l'écoulement d'air induit par le ventilateur de refroidissement (4) puisse facilement traverser les canaux de guidage d'air (214) et les trous traversants amont (10) pour entrer dans le logement (1), dans lequel une première extrémité de l'arbre tournant (16) de l'ensemble rotor est montée sur le premier palier (11) au niveau de la paroi de fermeture plate (101) du logement (1), et dans lequel la seconde extrémité de l'arbre tournant (16) de l'ensemble rotor est montée au niveau d'un second palier (20) et le ventilateur de refroidissement (4) étant monté au niveau de ladite seconde extrémité de l'arbre tournant (16) de l'ensemble rotor;
**caractérisé en ce que**
le logement (1) débouche au niveau d'une ouverture (102) opposée à la paroi de fermeture plate (101);
dans lequel le cache (2) est configuré pour être ajusté avec le logement (1) en vue d'étanchéifier l'ouverture (102) du logement (1), dans lequel le logement (1) et le cache (2) coopèrent en outre l'un avec l'autre pour définir un espace récepteur;
dans lequel le second palier (20) est formé au centre du corps circulaire du cache (2), dans lequel le ventilateur de refroidissement (4) monté à la seconde extrémité de l'arbre tournant (16) est agencé près du cache (2) et à l'extérieur de l'espace récepteur défini par le logement (1) et le cache (2);
dans lequel la pluralité de saillies de prise de vent s'étendant axialement (21) est formée solidairement sur la circonférence externe du corps circulaire du cache (2), de telle sorte que chaque saillie de prise de vent (21) soit située au-dessus de l'un des trous traversants amont (10) du logement (1),
dans lequel l'écoulement d'air induit par le ventilateur de refroidissement (4) traverse facilement les canaux de guidage d'air (214) et les trous traversants amont (10) pour entrer dans le logement (1) et puisse sortir du logement (1) via les trous traversants aval (103).

2. Moteur selon la revendication 1, dans lequel chacune des saillies de prise de vent (21) est une couche de renflement qui comporte un toit (211) et deux parois penchées (212) (213) réunies entre le toit (211) et la circonférence du cache (2), le canal de guidage d'air (214) de chaque saillie de prise de vent (21) étant défini entre le toit (211) et les deux parois penchées (212) (213) de chaque saillie de prise de vent (21), et la circonférence du cache (1) ; moyennant quoi l'écoulement d'air induit par le ventilateur de refroidissement (4) peut facilement traverser les canaux de guidage d'air (214) et les trous traversants amont (10) pour entrer dans le logement (1).

3. Moteur selon la revendication 1, dans lequel un manchon (3), constitué d'un métal magnétiquement perméable, est intimement ajusté autour de la paroi circonférentielle du logement (1) pour augmenter encore la performance du moteur.

4. Moteur selon la revendication 1, dans lequel un évidement (22) est défini entre deux saillies adjacentes parmi les saillies de prise de vent (21), de telle sorte qu'une partie de l'écoulement d'air induit par le ventilateur de refroidissement (4), qui n'entre pas dans le logement (1), puisse s'écouler le long de la surface externe de la paroi circonférentielle du logement (1) pour refroidir le logement (1).
